# EUROPÄISCHE PATENTSCHRIFT

(11) **EP 1 876 143 B1**
(45) Veröffentlichungstag und Bekanntmachung des Hinweises auf die Patenterteilung: **16.06.2010**
(21) Anmeldenummer: 07111411.0
(22) Anmeldetag: 29.06.2007
(51) Int. Cl.: C01B 33/037

(54) **Verfahren zur Reinigung von Polysilicium-Bruch**
Process for cleaning polysilicon fragments
Procédé de purification de fragments de polysilicium

(30) Priorität: 05.07.2006 DE 102006031105
(43) Veröffentlichungstag der Anmeldung: 09.01.2008
(73) Patentinhaber: Wacker Chemie AG, 81737 München (DE)
(72) Erfinder: Wochner, Hanns, 84489 Burghausen (DE); Gossmann, Christian, 84547 Emmerting (DE); Lindner, Herbert, 5121 Ostermiething (AT)
(74) Vertreter: Potten, Holger

(56) Entgegenhaltungen:
- DE-A1- 19 529 518
- DE-A1- 19 817 486
- JP-A- 11 176 784
- US-A- 5 846 921
- US-B1- 6 369 008

## Beschreibung

Die Erfindung betrifft ein Verfahren zur Reinigung von Polysilicium-Bruch.

Hochreines polykristallines Silicium, im Folgenden als Polysilicium bezeichnet, wird in großem Maßstab durch thermische Zersetzung eines siliciumhaltigen Gases oder eines siliciumhaltigen Gasgemisches in so genannten Siemens-Reaktoren hergestellt. Das Polysilicium fällt dabei in Form von Stäben an. Diese Stäbe werden anschließend mit metallischen Brechwerkzeugen, wie Backen- oder Walzenbrechern, Hämmern oder Meißeln, zerkleinert. Dies führt zu einer oberflächlichen Verunreinigung der Polysilicium-Bruchstücke. Diese Verunreinigung, insbesondere auch jede metallische Verunreinigung, muss vor der Weiterverarbeitung der Polysilicium-Bruchstücke entfernt werden, da sie im Ausgangsmaterial für die Herstellung von elektronischen Bauteilen und Solarzellen, für das der Polysilicium-Bruch in aller Regel verwendet wird, nicht akzeptabel sind.

US 5,846,921 offenbart ein Verfahren zur Reinigung von Silicium Halbleitersubstraten dadurch gekennzeichnet, daß ein Silicium Halbleitersubstrat in eine wäßrige Reinigungslösung enthaltend HF und H₂O₂ gegeben wird, diese wäßrige Reinigungslösung entfernt wird und das so enhaltene Silicium Halbleitersubstrat mit hochreinem Wasser gespült und anschließend getröcknet wird.

DE 195 29 518 offenbart ein Verfahren zur Reinigung von polykristallinem Siliciumbruchstücken, wobei man das polykristalline Silicium sequentiell mit eine oxydierenden Flüssigkeit (Königswasser), mit Wasser und mit einen flüssigen Chemikalie, die dazu befähig ist einen Oxid-Film zu zersetzen (HF), behandelt.

Das Patent US 6,309,467 B1 beschreibt den Stand der Technik zur Reinigung von Polysilicium-Bruchstücken ausgiebig und offenbart ein dreistufiges Reinigungsverfahren für Polysilicium, welches anschließend einen sehr niedrigen Eisen und/oder Chromgehalt aufweist. Bei diesem Verfahren erfolgt die Reinigung nacheinander in mehreren chemischen Behandlungsschritten. Mehrstufige Reinigungsverfahren erfordern Anlagen mit mehreren Becken die entsprechend aufwändig sind. Nachteiligerweise ist das in US 6,309,467 B1 beschriebene Verfahren bei der Reinigung von feinteiligem Polysiliciumbruch zudem mit einem hohen Verbrauch an Säure und einem hohen Siliciumverlust verbunden. Ferner ist bei der Reinigung von feinteiligem Polysilicium-Bruch eine aufwändige Kühlung notwendig.

Aufgabe der vorliegenden Erfindung war es, ein Verfahren zur Reinigung von polykristallinen Siliciumbruchstücken auf einen Metallgehalt von < 100 ppbw, vorzugsweise von < 10 ppbw, zur Verfügung zu stellen, welches die Nachteile des Stands der Technik vermeidet.

Die Aufgabe wird gelöst durch ein Verfahren, bei dem ein Polysilicium-Bruch in eine wässrige Reinigungslösung bestehend aus 0,1 bis 60 Gew. % HF, 0,1 bis 50 Gew. % H₂O₂ sowie dem Rest auf 100 Gew.% aus H₂O gegeben wird, diese wässrigen Reinigungslösung entfernt wird und der so erhaltene Polysilicium-Bruch mit hochreinem Wasser gespült und anschließend getrocknet wird.

Die Gew. % Angaben beziehen sich auf die gesamte Reinigungslösung.

Besonders bevorzugt besteht die Lösung aus 5 bis 10 Gew. % HF und 1 bis 2 Gew. % H₂O₂ in H₂O. Die wässrige Lösung enthaltend HF/H₂O₂ ist aus verschiedenen Gründen besonders wirtschaftlich:
Sie greift metallische Verunreinigungen, insbesondere Stahlpartikel, verstärkt an, greift aber das Silizium nicht an. Zudem zeigt diese Reinigungslösung im Unterschied zu einer Mischung HF/HCl/H₂O₂ oder der Mischung HCl/H₂O₂ des Stands der Technik keine Eigenzersetzung des Wasserstoffperoxyds in Wasser und Sauerstoff. Dadurch verringert sich der H₂O₂-Verbrauch im Verfahren um etwa 99 %. Eine Nachdosierung von H₂O₂ ist im Verfahren nicht erforderlich. Ferner wird die unerwünschte Wärmeentwicklung, die durch die Eigenzersetzung des Wasserstoffperoxyds auftritt, vermieden.

Vorzugsweise wird der Polysilicium-Bruch für 5 bis 240 Min. vorzugsweise 20 bis 45 Min., besonders bevorzugt 40 Min. in die wässrige Reinigungslösung gegeben.

Vorzugsweise wird der Polysilicium-Bruch in einem Behälter, der Öffnungen aufweist, in die Reinigungsflüssigkeit eingetaucht, wobei Reinigungsflüssigkeit durch die Öffnungen in den Behälter einströmt und das polykristalline Silicium benetzt, sodann wird der Behälter so weit aus der Flüssigkeit gehoben, dass die Reinigungsflüssigkeit durch die Öffnungen des Behälters herausströmen kann.

Vorzugsweise wird der Polysilicium-Bruch in einem Behälter, vorzugsweise einem Korb, zumindest zweimal mittels einer Hub-Senkbewegung in die Reinigungsflüssigkeit eingetaucht. Vorzugsweise werden diese Hub- und Senkbewegungen so ausgeführt, dass der Behälter, während er aus der Reinigungslösung gehoben ist, sich vollständig entleeren kann, wobei die Reinigungslösung vollständig herausströmt.

Vorzugsweise wird diese Hub- und Senkbewegung 5 Mal in der Minute für bis zu 240 Minuten, vorzugsweise bis zu 40 Minuten durchgeführt.

Grundsätzlich kann die Reinigung auch ohne Bewegung des Behälters in den einzelnen Reinigungsschritten erfolgen. Neben der Hub-Senkbewegung kann alternativ auch eine Schaukelbewegung mit 1 bis 10 Bewegungen pro Minute mit einem Winkel von 5 bis 89 Grad oder eine Drehbewegung mit 1 bis 10 Umdrehungen pro Minute erfolgen. Vorzugsweise findet die Schaukelbewegung mit 1 Bewegung pro Minute und einem Winkel von 45 Grad statt. Die Drehbewegung erfolgt vorzugsweise bei 1 Umdrehung pro Minute.

Anschließend wird die Reinigungslösung entfernt und der Polysilicium-Bruch mit hochreinem Wasser, vorzugsweise vollentsalztes Wasser mit einem spezifischen elektrischen Widerstand von 15 - 18 MOhm 1 bis 240 Min. lang gespült. Vorzugsweise wird der Polysilicium-Bruch 15 bis 35 Min., besonders bevorzugt 20 Min. gespült.

Der Reinigungs- und der Spülschritt werden vorzugsweise bei Normaldruck und Raumtemperatur (25°C) durchgeführt, wobei das Reinigungsverfahren bevorzugt bei 5°C bis 80°C und besonders bevorzugt bei 20°C bis 25°C ausgeführt wird.

Anschließend wird der Polysilicium-Bruch getrocknet. Die Trocknung erfolgt vorzugsweise über einen Zeitraum von 0,5 bis 3 h bei einer Temperatur von 50 bis 100°C

Die Trocknung des Polysilicium-Bruchs kann grundsätzlich in einer beliebigen Trockenanlage erfolgen. Bei einer Trocknung in einem Trockenschrank bei 80 Grad Celsius werden 24 Stunden benötigt. Durch andere Trocknungsverfahren kann diese Zeit auf unter 2 Stunden gedrückt werden. Solche Verfahren sind beispielsweise das Trocknen in einer Trommeltrocknungsanlage oder das Trocknen in einem System mit Zwangsdurchströmung oder das Trocknen in Schichten mit einer Schütthöhe bis maximal 5 cm.

Das erfindungsgemäße Verfahren ist zwar prinzipiell zur Reinigung von beliebigen Polysilicium-Bruchstücken sowie auch zur Reinigung von Polysilicium-Granulat geeignet, es eignet sich jedoch insbesondere zur Reinigung feinteiliger Polysilicium-Bruchstücke, da das Silicium durch die Reinigungslösung nicht angegriffen wird. Dadurch wird der aufgrund der zunehmenden Siliciumoberfläche der feinteiligeren Pulver sich verstärkende Siliciumverlust, der mit anderen Reinigungslösungen auftritt, vermieden. Ferner wird eine zusätzliche Kühlung, die beim Auflösen des Siliciums notwendig wäre, vermieden. Das erfindungsgemäße Verfahren eignet sich damit vorzugsweise zur Reinigung von Polysilicium-Bruchstücken mit einem maximalen Teilchendurchmesser von etwa 50 mm, besonders bevorzugt einem maximalen Teilchendurchmesser von etwa 25 mm, insbesondere bevorzugt mit einem maximalen Teilchendurchmesser von 10 µm bis 10 mm.

Der Behälter, in dem das erfindungsgemäße Verfahren durchgeführt wird, kann aus einem preiswerten Kunststoff, wie z. B. Polypropylen, bestehen, während herkömmliche Verfahren in Behältern aus teureren Kunststoffen, wie Polyvinylidenfluorid oder Teflon/PTFE, durchgeführt werden müssen.

Das Verfahren kann grundsätzlich in einer Hub/Senk-Anlage, Trommelanlage oder Schaukelanlage mit mehreren Becken, die hinter einander angeordnet sind, durchgeführt werden. Vorzugsweise wird es jedoch in einem einzigen Becken, bei dem die verschiedenen Medien (HF/H₂O₂ und Spülwasser) aus verschiedenen Behältern zugeführt werden, durchgeführt.

Dies kann beispielsweise in einer käuflich erhältlichen Autoklavenätzanlage geschehen. In dieser Anlage findet das Reinigen, Spülen und Trocknen in einer Einkammeranlage statt. Eine solche Anlage erfordert gegenüber einer Hub/Senk-Anlage einen deutlich geringeren Platzbedarf.

Das erfindungsgemäße Verfahren ermöglicht es, einen stark mit Eisen und Chrom verunreinigten Polysilicium-Bruch auf einen Eisen- und Chromgehalt kleiner 100 ppbw, vorzugsweise kleiner 10 ppbw, zu reinigen. Ein derartiges Polysilicium mit einem Eisen- und Chromgehalt kleiner 10 ppbw wird bevorzugt in der Solarindustrie eingesetzt. Aber auch ein Polysilicium-Bruch mit einem Eisen- und Chromgehalt kleiner 100 ppbw ist wünschenswert, da diese Materialien in den Ziehprozessen zu qualitativ besserem Material zugemischt werden kann. Das Verfahren ist erheblich kostengünstiger als bekannte Verfahren zur Reinigung von Polysilicium-Bruch.

Die folgenden Beispiele dienen der weiteren Erläuterung der Erfindung.

### Beispiel 1: (erfindungsgemäß)

30 kg eines Polysilicium-Bruchs mit einem Partikeldurchmesser von 10 bis 10 000 µm und einer oberflächlichen Verunreinigung an Fe von 1 ppm, wie sie beim Brechen eines Polysiliziumstabes mittels einer herkömmlichen Brechanlage auftritt, werden in eine Prozessschale mit Deckel gegeben. Anschließend wird 600 l einer Mischung von 10 Gew% HF und 2 Gew% H₂O₂ in Wasser in die Prozessschale gegeben und der Deckel geschlossen. Die Prozessschale führt während der Reinigung ein Hub/Senk-Bewegung mit einer Frequenz von 5 Hüben pro Minute durch. Nach einer 20 bzw. 40minütigen Säurebehandlung wird die Säure abgelassen und der Polysilicium-Bruch anschließend 5 Min. mit kaltem Reinstwasser gespült. Nach einer Warmwasserspülung bei 80 Grad wird das Material bei 80 Grad im Trockenschrank 24 Stunde lang getrocknet.

### Beispiel 2: (Vergleichsbeispiel)

Analog Beispiel 1 wurden 30 kg eines Polysilicium-Bruchs mit einem Partikeldurchmesser von 10 bis 10 000 µm gereinigt, wobei statt der Mischung von 10 Gew% HF und 2 Gew% H₂O₂ in Wasser nun eine Mischung aus 5 Gew% HF, 10 Gew% HCI und 1,5 Gew% H₂O₂ in Wasser eingesetzt wurde.

### Beispiele 3:

Die Verunreinigung der Oberflächen der gemäß Bsp. 1 und Bsp. 2 erhaltenen gereinigten Siliciumpulver wurde, wie in US 6,309,467 B1 am Ende von Bsp. 3 beschrieben, bestimmt. Tab. 1 gibt die ermittelten Werte sowie die Ausbeute an gereinigtem Si und den jeweiligen spezifischen Säureverbrauch (g Säure/Kg Si) wieder.

**Tab. 1**

| Medium | Reinigungszeit [Min] | Fe [ppbw] | Cr [ppbw] | Ni [ppbw] | Ausbeute in % | Spezifischer Säureverbrauch in g/kg |
|---|---|---|---|---|---|---|
| HF/H₂O₂ (e) | 20 | 15 | 1 | 0,5 | 99,9 | 0,001 |
| HF/H₂O₂ (e) | 40 | 5 | 0,5 | 0,2 | 99,9 | 0,002 |
| HF/HCl/H₂O₂(v) | 20 | 15 | 1 | 0,5 | 99 | 0,2 |
| HF/HCl/H₂O₂(v) | 40 | 5 | 0,5 | 0,2 | 98 | 0,4 |

| | | | | | | |
|---|---|---|---|---|---|---|
| (v) Vergleichsbeispiel; (e) erfindungsgemäßes Bespiel. | | | | | | |

Die Ergebnisse zeigen, dass mit der erfindungsgemäßen Aufreinigung ebenso gute Ergebnisse erzielt werden, wie mit dem Verfahren gemäß Stand der Technik. Vorteilhaferweise kommt es beim erfindungsgemäßen Verfahren allerdings zu keinem Siliciumverlust, so dass insbesondere bei feinen Pulvern mit großer Oberfläche die Ausbeuten an gereinigtem Si stark erhöht sind. Der Siliziumverlust von 0,1% beim Reinigen mit HF/H₂O₂ entsteht nur durch das Austragen von Si-Feinstaub. Beim Reinigen mit HF/HCl/H₂O₂ entsteht der Verlust durch den Feinstaubaustrag und die Menge an aufgelöstem Silizium, die durch den Ätzabtrag von 0,1 µm entsteht. Während mit einer Reinigungszeit von 40 Minuten mit dem erfindungsgemäßen Verfahren ein Material mit einem Eisen- und Chrom-Gehalt von < 10 ppbw erhalten werden kann, welches allen Anforderungen genügt, ist auch ein Verfahren mit einer kürzeren Reinigungszeit (zwischen 5 bis 40 Min) noch vorteilhaft, da ein derartiges Material mit Verunreinigungen unter 100 ppbw eine für verschiedene Anforderungen ausreichende Qualität aufweist.

## Patentansprüche

1. Verfahren zur Reinigung von polykristallinen Siliciumbruchstücken auf einen Metallgehalt von < 100 ppbw **dadurch gekennzeichnet, dass** ein Polysilicium-Bruch in eine wässrige Reinigungslösung bestehend aus 0,1 bis 60 Gew.% HF und 0,1 bis 50 Gew.% H₂O₂ sowie dem Rest auf 100 Gew.% aus H₂O, gegeben wird, diese wässrige Reinigungslösung entfernt wird und der so erhaltene Polysilicium-Bruch mit hochreinem Wasser gespült und anschließend getrocknet wird.

2. Verfahren nach Anspruch 1, **dadurch gekennzeichnet, dass** der Polysilicium-Bruch für 5 bis 240 Min. vorzugsweise 20 bis 45 Min., besonders bevorzugt 40 Min. in die wässrige Reinigungslösung gegeben wird.

3. Verfahren nach einem der Ansprüche 1 oder 2, **dadurch gekennzeichnet, dass** der Polysilicium-Bruch in einem Behälter, der Öffnungen aufweist, in die Reinigungsflüssigkeit eingetaucht wird, wobei Reinigungsflüssigkeit durch die Öffnungen in den Behälter einströmt und das polykristalline Silicium benetzt, sodann der Behälter soweit aus der Flüssigkeit gehoben wird, dass die Reinigungsflüssigkeit durch die Öffnungen des Behälters herausströmen kann.

4. Verfahren nach Anspruch 3, **dadurch gekennzeichnet, dass** der Polysilicium-Bruch in dem Behälter, vorzugsweise einem Korb, zumindest zweimal mittels einer Hub-Senkbewegung in die Reinigungsflüssigkeit eingetaucht wird.

5. Verfahren nach Anspruch 4, **dadurch gekennzeichnet, dass** die Hub- und Senkbewegungen so ausgeführt wird, dass der Behälter, während er aus der Reinigungslösung gehoben ist, sich vollständig entleeren kann, wobei die Reinigungslösung vollständig herausströmt.

6. Verfahren nach Anspruch 4 oder 5, **dadurch gekennzeichnet, dass** die Hub- und Senkbewegung 5 Mal in der Minute für bis zu 240 Minuten, vorzugsweise bis zu 40 Minuten durchgeführt wird.

7. Verfahren nach Anspruch 3, **dadurch gekennzeichnet, dass** der Polysilicium-Bruch in dem Behälter eine Schaukelbewegung mit 1 bis 10 Bewegungen pro Minute mit einem Winkel von 5 bis 89 Grad oder eine Drehbewegung mit 1 bis 10 Umdrehungen pro Minute ausführt, wobei die Schaukelbewegung vorzugsweise mit 1 Bewegung pro Minute und einem Winkel von 45 Grad stattfindet und die Drehbewegung vorzugsweise bei 1 Umdrehung pro Minute erfolgt.

8. Verfahren nach einem der Ansprüche 1 bis 7, **dadurch gekennzeichnet, dass** der Polysilicium-Bruch mit vollentsalztem Wasser mit einem spezifischen elektrischen Widerstand von 15 - 18 MOhm 1 bis 240 Min. gespült wird.

9. Verfahren nach einem der Ansprüche 1 bis 8, **dadurch gekennzeichnet, dass** es bei Normaldruck und Raumtemperatur (25°C) durchgeführt wird.

10. Verfahren nach einem der Ansprüche 1 bis 9, **dadurch gekennzeichnet, dass** der Polysilicium-Bruch einen maximalen Teilchendurchmesser von etwa 50 mm, besonders bevorzugt einem maximalen Teilchendurchmesser von etwa 25 mm, insbesondere bevorzugt einem maximalen Teilchendurchmesser von 10 µm bis 10 mm hat.

## Claims

1. Method for cleaning polycrystalline silicon fragments to a metal content of < 100 ppbw, **characterized in that** a polysilicon fraction is added to an aqueous cleaning solution consisting of from 0.1 to 60 wt.% HF and from 0.1 to 50 wt.% H₂O₂, and the remainder to 100 wt.% of H₂O, this aqueous cleaning solution is removed and the polycrystalline fraction thereby obtained is washed with highly pure water and subsequently dried.

2. Method according to Claim 1, **characterized in that** the polysilicon fraction is added to the aqueous cleaning solution for from 5 to 240 min, preferably from 20 to 45 min, particularly preferably 40 min.

3. Method according to Claim 1 or 2, **characterized in that** the polysilicon fraction in a container which has openings is immersed into the cleaning liquid, cleaning liquid flowing through the openings into the container and wetting the polycrystalline silicon, then the container is raised out of the liquid until the cleaning liquid can flow out through the openings of the container.

4. Method according to Claim 3, **characterized in that** the polysilicon fraction in the container, preferably a basket, is immersed into the cleaning liquid at least twice by means of a raising and lowering movement.

5. Method according to Claim 4, **characterized in that** the raising and lowering movements are configured so that the container can be fully emptied when it is raised out of the cleaning solution, the cleaning solution flowing out fully.

6. Method according to Claim 4 or 5, **characterized in that** the raising and lowering movement is carried out 5 times per minute for up to 240 minutes, preferably up to 40 minutes.

7. Method according to Claim 3, **characterized in that** the polysilicon fraction in the container executes a seesaw movement with from 1 to 10 movements per minute at an angle of from 5 to 89 degrees or a rotary movement with from 1 to 10 revolutions per minute, the seesaw movement preferably taking place with 1 movement per minute and an angle of 45 degrees and the rotary movement preferably being performed at 1 revolution per minute.

8. Method according to one of Claims 1 to 7, **characterized in that** the polysilicon fraction is washed for from 1 to 240 min with fully deionized water having an electrical resistivity of 15 - 18 Mohm.

9. Method according to one of Claims 1 to 8, **characterized in that** it is carried out at standard pressure and room temperature (25°C).

10. Method according to one of Claims 1 to 9, **characterized in that** the polysilicon fraction has a maximum particle diameter of about 50 mm, particularly preferably a maximum particle diameter of about 25 mm, more particularly preferably a maximum particle diameter of from 10 µm to 10 mm.

## Revendications

1. Procédé pour la purification de fragments de silicium polycristallin jusqu'à une teneur en métaux de < 100 ppbw (parties par milliard en poids), **caractérisé en ce qu'**on introduit des fragments de polysilicium dans une solution aqueuse de purification constituée de 0,1 à 60 % en poids de HF et de 0,1 à 50 % en poids de H₂O₂ ainsi que le reste à 100 % en poids de H₂O, on élimine cette solution aqueuse de purification et on rince à l'eau très pure les fragments de polysilicium ainsi obtenus, et ensuite on les sèche.

2. Procédé selon la revendication 1, **caractérisé en ce que** les fragments de polysilicium sont introduits dans la solution aqueuse de purification pendant 5 à 240 minutes, de préférence 20 à 45 minutes, de façon particulièrement préférée 40 minutes.

3. Procédé selon la revendication 1 ou 2, **caractérisé en ce qu'**on immerge dans le liquide de purification les fragments de polysilicium dans un récipient qui comporte des orifices, le liquide de purification pénétrant par les orifices dans le récipient et mouillant le silicium polycristallin, puis on retire le récipient du liquide, de sorte que le liquide de purification peut sortir par les orifices du récipient.

4. Procédé selon la revendication 3, **caractérisé en ce que** les fragments de polysilicium sont immergés dans le liquide de purification dans le récipient, de préférence un panier, au moins deux fois au moyen d'un mouvement de levage-descente.

5. Procédé selon la revendication 4, **caractérisé en ce que** les mouvements de levage et descente sont effectués de sorte que le récipient, pendant qu'il est retiré de la solution de purification, peut se vider complètement, la solution de purification étant totalement évacuée.

6. Procédé selon la revendication 4 ou 5, **caractérisé en ce que** le mouvement de levage et descente est effectué 5 fois par minute pendant jusqu'à 240 minutes, de préférence jusqu'à 40 minutes.

7. Procédé selon la revendication 3, **caractérisé en ce que** les fragments de polysilicium exécutent dans le récipient un mouvement basculant avec 1 à 10 mouvements par minute à un angle de 5 à 89 degrés ou un mouvement de rotation avec 1 à 10 tours par minute, le mouvement de bascule ayant lieu de préférence avec 1 mouvement par minute et un angle de 45 degrés et le mouvement de rotation s'effectuant de préférence à 1 tour par minute.

8. Procédé selon l'une des revendications 1 à 7, **caractérisé en ce que** les fragments de polysilicium sont rincés à l'eau totalement déminéralisée ayant une résistance électrique spécifique de 15 - 18 Mohms pendant 1 à 240 minutes.

9. Procédé selon l'une des revendications 1 à 8, **caractérisé en ce qu'**il est effectué sous la pression normale et à la température ambiante (25 °C).

10. Procédé selon l'une des revendications 1 à 9, **caractérisé en ce que** les fragments de polysilicium présentent un diamètre maximum de particule d'environ 50 mm, de façon particulièrement préférée un diamètre maximum de particule d'environ 25 mm, de façon particulièrement préférée un diamètre maximum de particule de 10 µm à 10 mm.
